# EUROPÄISCHE PATENTSCHRIFT

(11) **EP 0 518 369 B1**
(45) Veröffentlichungstag und Bekanntmachung des Hinweises auf die Patenterteilung: **28.09.1994**
(21) Anmeldenummer: 92109944.6
(22) Anmeldetag: 12.06.1992
(51) Int. Cl.: F28D 20/00

(54) **Schichtspeicher**
Stratified accumulator
Accumulateur stratifié

(30) Priorität: 13.06.1991 DE 4119542
(43) Veröffentlichungstag der Anmeldung: 16.12.1992
(73) Patentinhaber: Thermo-Solar Energietechnik GmbH, D-93055 Regensburg (DE)
(72) Erfinder: Kellner, Bernd, W-8411 Eilsbrunn (DE); Weber, Eckhart, W-8500 Nürnberg (DE)
(74) Vertreter: WILHELMS, KILIAN & PARTNER Patentanwälte

(56) Entgegenhaltungen:
- DE-A- 2 751 265
- DE-A- 3 905 874
- PATENT ABSTRACTS OF JAPAN vol. 7, no. 20 (M-188)(1165) 26. Januar 1983 & JP-A-57 174 646 (TAKEHISA TOMOTSUNE) 27. Oktober 1982
- PATENT ABSTRACTS OF JAPAN vol. 10, no. 257 (M-513) 3. September 1986 & JP-A-61 083 885 (KEIICHI YASUKAWA) 28. April 1986

## Beschreibung

Die Erfindung bezieht sich auf einen Schichtspeicher für Warmwasser.

Es ist bei der Speicherung von Warmwasser (oder generell erwärmten Flüssigkeiten) erstrebenswert, beim Beladen des Speichers eine Durchmischung heißerer und kälterer Anteile des gespeicherten Wassers soweit wie möglich zu verhindern, weil nur auf diese Weise Wärmeenergie auf möglichst hoher Temperatur erhalten und damit in weitestem Maße nutzbar bleibt.

Das Problem ist besonders bei Warmwasserspeichern in Verbindung mit Sonnenkollektoranlagen gravierend, weil hier im zeitlichen Ablauf Warmwasser bei ganz unterschiedlichen Temperaturen anfällt. Man ist daher gerade dort bestrebt, das erwärmte Wasser geschichtet in einen Warmwasserspeicher einzuspeisen, und zwar so, daß Wasser auf unterschiedlichen Temperaturen in unterschiedlichen Höhen des Speichers eingelagert wird.

Ein Warmwasser-Schichtspeicher gemäß dem Oberbegriff des Patentanspruchs 1 ist aus der DE-OS 27 51 265 bekannt.

Bei diesem bekannten Warmwasser-Schichtspeicher ist ein Leitrohr für das erwärmte Wasser vorgesehen, welches sich vom Boden des Speichers mit offenem oberen Ende nach oben erstreckt, am unteren Ende über ein Einspeiserohr beschickt wird und auf verschiedenen Höhen mit in den Tank führenden Öffnungen versehen ist, die sich alle oberhalb der Einspeisung- bzw. Beschickungsstelle befinden. Eine solche Anordnung arbeitet jedoch nicht zufriedenstellend, weil heißes Beladewasser zwar im Leitrohr aufsteigt, sich jedoch mit kälterem Wasser vermischt, welches wegen des Dichteunterschiede durch die Öffnungen des Leitrohres in dieses hineinfällt, so daß das Leitrohr praktisch wirkungslos ist.

In A.H. Fanney und S.A. Klein,THERMAL PERFORMANCE COMPARISONS FOR SOLAR HOT WATER SYSTEMS SUBJECTED TO VARIOUS COLLECTOR AND HEAT EXCHANGER FLOW RATES, Solar Energy, Vol. 40, No. 1, Seiten 1-11, 1988, ist ein Speicher angesprochen, bei welchem das Leitrohr am oberen Ende beschickt wird und auf verschiedenen Höhen über ein koaxiales Überrohr mit höhenversetzt angeordneten Öffnungen in das Tankvolumen führende Öffnungen aufweist. Ein solcher Warmwasserspeicher hat den entscheidenden Nachteil, daß später zugeführtes kälteres Wasser stets wärmere Zonen durchqueren muß, was zu einer unerwünschten Ausbildung von die Temperaturschichtung störenden Mischtemperaturen führt.

Bei einem aus der DE-PS 39 05 874 bekannten Warmwasser-Schichtspeicher ist ein Leitrohr für das erwärmte Wasser vorgesehen, welches sich vom Boden des Speichers mit offenem oberen Ende nach oben erstreckt, am unteren Ende beschickt wird und darüber auf verschiedenen Höhen mit Auslässen versehen ist, die jeweils mit einem Klappenventil verschlossen sind. Diese Klappenventile reagieren auf die Differenz der Drucke zu beiden Seiten des Ventils, die ihrerseits wiederum mit den temperaturabhängigen Dichten des Wassers zu beiden Seiten des Ventils zusammenhängen. Auf diese Weise wird unter Einsatz solcher Rückschlagklappen in den Auslässen erreicht, daß Wasser einer bestimmten Temperatur auf einer bestimmten Höhe in den Tank eingespeist wird, und verhindert, daß Wasser aus dem Tank zurück in das Leitrohr gelangt. Derartige Rückschlagklappen sind nachteilig, insofern als sie filigran und damit störanfällig sind. Ihre Funktion kann nicht jahrzehntelang garantiert werden. Außerdem sind sie im geschlossenen Speicher nur schwer zu überprüfen.

Aufgabe der Erfindung ist es, einen Schichtspeicher zu schaffen, bei welchem unter Beibehaltung eines mechanisch möglichst einfachen, möglichst wenige bewegliche Teile enthaltenden Aufbaus eine sichere Schichteinspeicherung gewährleistet ist.

Diese Aufgabe wird durch einen Schichtspeicher mit den im Patentanspruch 1 angegebenen Merkmalen gelöst.

Das Strömungsverhalten des Wassers im Leitrohr wird durch die temperaturabhängige Dichte beherrscht. Eingespeistes Wasser, das mindestens genauso warm ist wie das oberhalb der Einspeisestelle im Tank stehende Wasser, steigt im Leitrohr auf und verläßt dieses über den Auslaß am oberen Ende. Eingespeistes Wasser, welches kälter als das ober der Einspeisestelle im Tank stehende Wasser ist, fällt von der Einspeisestelle im Leitrohr nach unten und verläßt das Leitrohr in den Tank durch solche der in verschiedenen Höhen liegenden freien Öffnungen, die um so tiefer liegen, je tiefer die Temperatur ist. Die erfindungsgemäße Lage der Einspeisestelle zwischen dem Auslaß des Leitrohres und dessen Öffnungen macht eine gesicherte Schichtspeicherung auch ohne die Verwendung von Rückschlagklappen möglich. Ebenso und vor allem wird ein Abbau der heißen Schicht bei kühler werdendem Beladewasser verhindert.

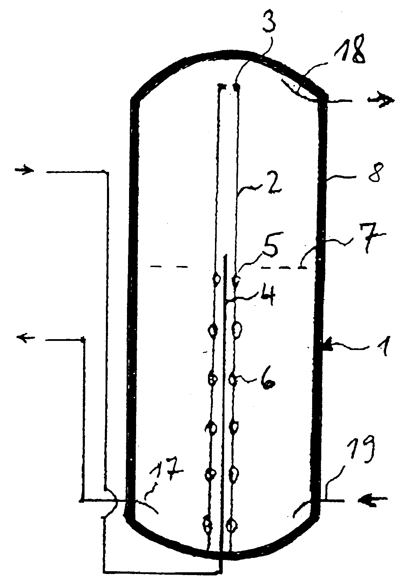

Die Erfindung wird nun anhand der einzigen Figur der beigefügten Zeichnung, die eine bevorzugte Ausführungsform des erfindungsgemäßen Schichtspeicher in schematischer Darstellung wiedergibt, näher beschrieben.

Der insgesamt mit 1 bezeichnete Heißwasserspeicher umfaßt einen Tank 8, in den, hier vom Boden her, ein Warmwasserzuführrohr bzw. Beladewassereinspeiserohr 4 geführt ist, welches mit dem Vorlauf der Sekundärseite eines Wärmetauschers verbunden sein kann, welcher primärseitig an beispielsweise einen Sonnenkollektor angeschlossen ist. Das Beladewassereinspeiserohr 4 steht hier vertikal und mittig im Tank 8 und endet auf einer mittleren Höhe, die durch den Brauchwassertagesbedarfspegel 7 bestimmt ist. Das Beladewassereinspeiserohr 4 ist koaxial von einem Leitrohr 2 umgeben, welches im oberen Bereich des Tanks 8 endet. Unterhalb des Austritts des Beladewassereinspeiserohres 4 weist das Leitrohr 2 in den Tank 8 führend einen obersten Lochkranz 5 ohne Rückschlagklappen oder dergleichen auf. Der oberste Lochkranz 5 ist nach unten von vorzugsweise in gleichmäßigem Abstand liegenden weiteren derartigen Lochkränzen 6 gefolgt. In der dargestellten Ausführungsform ist das Leitrohr 2 am oberen Ende mit einer in den Tank führenden Öffnung bzw. einem Mündungsauslaß 3 versehen, der den Austritt gegenüber dem Leitrohrquerschnitt verengt und in der weiter unten angegebenen Weise querschnittsmäßig eingestellt ist. Dieser Querschnitt kann fest oder auch thermostatisch steuerbar sein. Es ist nicht unbedingt erforderlich, daß sich der Auslaß in der Stirnfläche des Leitrohres befindet. Ein Auslaß oder auch Auslässe im Ende der Rohrwand eines stirnseitig völlig geschlossenen Leitrohres sind ebenfalls möglich. Mit 18 ist der Brauchwasservorlauf angedeutet, über den das erwärmte Wasser aus dem Speicher entnommen wird, 17 bezeichnet eine Beladewasserentnahme, über das auf der tiefsten Temperatur im Speicher befindliches Wasser dem Wärmetauscher zugeführt wird, und 19 einen Kaltwasserzulauf, über den über den Brauchwasservorlauf 18 übernommenes Wasser ersetzt wird.

Da das Beladewassereinspeiserohr 4 im Leitrohr stehende Wasserschichten durchläuft, die eine tiefere Temperatur haben können als das eingespeiste Warmwasser, ist es zur Vermeidung von Wärmeverlusten zweckmäßig, das Einspeiserohr aus wärmeisolierendem Material vorzusehen. Ebenso ist es zweckmäßig, das Leitrohr 2 aus die Wärme schlecht leitendem Material auszuführen. Bei einer Einführung des Beladewassereinspeiserohres 4 von der Seite her kann das Problem der Durchquerung kälterer Zonen und damit einer unerwünschten Abkühlung des eingespeisten warmen Wassers vermieden werden. Auch eine Einführung des Beladewasser-Einspeiserohres 4 von oben her ist denkbar, allerdings kann dann das umgekehrte Problem auftreten, daß eingespeistes kälteres Wasser das bereits im Speicher stehende heiße Wasser abkühlt.

Die Wirkungsweise des gegenständlichen Schichtspeichers ist die folgende. Es sei zunächst angenommen, daß über das Beladewassereinspeiserohr 4 warmes Wasser zugeführt wird, dessen Temperatur höher oder gleich derjenigen des oben im Tank 8 stehenden Wassers ist. Dann wird das aus dem Beladewassereinspeiserohr 4 austretende Wasser im Leitrohr 2 auftriebsbedingt nach oben steigen und das Leitrohr 2 ausschließlich über den an seinem oberen Ende befindlichen Mündungsauslaß 3 verlassen. Der Mündungsauslaß bzw. die Austrittsöffnung 3 ist mit einem so geringen Strömungswiderstand zu wählen, daß sie in der Lage ist, das aus dem Beladewassereinspeiserohr 4 ausströmende Warmwasser allein aus dem Leitrohr 2 heraus in den Tank 8 abzuführen. Bei zu großem Strömungswiderstand würde sich das einströmende Warmwasser außerdem noch einen Weg durch die Öffnungen eines oder mehrerer der im unteren Teil des Leitrohrs 2 befindlichen Lochkränze 5, 6 suchen. Dies hätte zur Folge, daß heißes Wasser in kältere Warmwasserschichten eingelagert wird und sich unerwünschterweise eine Mischtemperatur ausbildet. Ist andererseits die Auslaßöffnung 3 am oberen Ende des Leitrohres zu groß, der Strömungswiderstand zu gering, so strömt das warme Wasser auftriebsbedingt zu schnell nach oben, was zur Folge hätte, daß durch die Lochkränze, den obersten und ggf. auch weiter darunter liegende, kälteres Wasser aus dem Tank 8 in das Leitrohr 2 angesaugt und ebenfalls das Leitrohr 2 durch die Auslaßöffnung am oberen Ende verlassen würde. Auch dies hätte eine Ausbildung von Wasser auf einer Mischtemperatur zur Folge, mit dem unerwünschten Effekt, daß Wasser auf der höchsten verfügbaren Temperatur verlorengeht. Im Ergebnis ist es also zweckmäßig, daß der Auslaß am oberen Ende so gewählt ist, daß die durch die Auslaßöffnung(en) 3 am oberen Ende des Leitrohres 2 in den Tank abgehende Wassermenge mit derjenigen übereinstimmt, die über das Beladewassereinspeiserohr 4 zugeführt wird. Die Größe der Mündungsöffnung 3 kann thermostatisch gesteuert werden, wobei die Größe die sie hat bzw. um die herum sie sich bewegt, vom zu erwartenden mittleren Mengenstrom des erwärmten Wassers abhängt. Bei einigen Quadratmetern Sonnenkollektorfläche sind typische zu erwartende Strömungsmengen 1 bis 2 l/min.

Nimmt nun die Temperatur des über das Beladewassereinspeiserohr 4 zugeführten Wassers, beispielsweise infolge abnehmender Sonneneinstrahlung auf den Sonnenkollektor, um einige Grade (6 bis 10°) ab, so fällt das dann eine größere Dichte als das weiter oben im Leitrohr bzw. Tank stehende Wasser aufweisende Wasser im Leitrohr von der Austrittsstelle nach unten und verläßt das Leitrohr 2 durch einen der Lochkränze 5, 6, und zwar um so höher je höher die Temperatur des Wassers ist. Auf diese Weise erfolgt eine Schichteinspeicherung des Brauchwassers, geschichtet nach Temperaturen von oben nach unten, so daß die unerwünschte Durchmischung verschiedener Temperaturschichten weitgehend vermieden wird und es außerdem im oberen Teil des Tanks zu keinem Abbau der heißesten Zone kommt, so daß oberhalb des obersten Lochkranzes 5 immer Brauchwasser auf der höchstmöglichen Temperatur zur Verfügung steht.

Wie bereits erwähnt, liegt der oberste Lochkranz 5 unterhalb des Endes des Beladewassereinspeiserohres 4, zweckmäßigerweise in Höhe des Warmwassertagesbedarfspegels, weil dieser obere Bereich im Tank als erster aufgeheizt wird. Dieser Tagesbedarfbereich ist auch geschichtet, ohne daß längs seiner Höhe Lochkränze, die ihre Funktion gar nicht erfüllen könnten, vorhanden sind, weil er, wenn nicht ohnehin mit Wasser einheitlicher Temperatur beladen, mit kühlerem Wasser stets von unten her beschickt wird.

Für einen ca. 2 m hohen Tank 8 kann das Brauchwassereinspeiserohr 4 etwa in einer Höhe von 1,40 m enden, die Anzahl der Lochkränze 6 betragen; die Anzahl der Löcher pro Lochkranz ist eine der Zahlen 1 bis 10, vorzugsweise 4 oder 6. Der Durchmesser eines Loches eines Lochkranzes 5, 6 liegt zwischen 20 und 5 mm, vorzugsweise 15 und 7 mm, insbesondere 12 und 8 mm und besonders vorzugsweise bei 10 mm, letzteres vorzugsweise auch bei einer Lochzahl pro Kranz von 4. Der Abstand der Lochkränze beträgt bevorzugt zwischen 300 und 100 mm, vorzugsweise 250 bis 150 mm, insbesondere 210 bis 190 mm, besonders bevorzugt 200 mm. Der Austritt des Brauchwassereinspeiserohres 4 sollte mindestens in etwa die Hälfte eines solchen Werts, vorzugsweise etwa einen ganzen solchen Wert, oberhalb des obersten Lochkranzes 5 liegen. Der Durchmesser der Auslaßöffnung 3 am oberen Ende des Leitrohres 2 beträgt zwischen 20 und 5 mm, bevorzugt zwischen 15 und 5 mm, insbesondere 10 und 5 mm, vorzugsweise zwischen 9 und 5 mm, ganz bevorzugt 8 mm. Der Innendurchmesser des Beladewassereinspeiserohres 4 kann 16 mm, derjenige des Leitrohres 2 50 mm betragen. Eine funktionsfähige Kombination für den ca. 2 m hohen Tank mit in etwa 1,40 m Höhe endendem Beladewassereinspeiserohr 4 hatte sechs Lochkränze mit jeweils vier Löchern eines Durchmessers von 10 mm im Abstand von 200 mm, wobei der oberste Lochkranz 5 etwa 200 mm unterhalb des oberen Endes des Einspeiserohres 4 lag. Der Durchmesser der Auslaßöffnung betrug 8 mm.

Wird das Beladewassereinspeiserohr 4 mit einer nicht nach oben weisenden Öffnung ausgeführt, oder ist die nach oben weisende Öffnung durch eine im Abstand zur Öffnung befindlichen Art Prallfläche abgeschirmt, dann ist gewährleistet, daß auch bei nahe an der Mündungsöffnung 3 des Leitrohres 2 befindlicher Öffnung des Beladewassereinspeiserohres 4 (beispielsweise bei geringer Tagesbedarfsmenge) nicht schon bedingt durch die Strömungsgeschwindigkeit des Wassers im Einspeiserohr 4 Wasser durch die Auslaßöffnung 3 befördert wird.

## Patentansprüche

1. Warmwasser-Schichtspeicher, mit
einem Tank (8), und
einem in dem Tank (8) im wesentlichen vertikal angeordneten, an seinem oberen Ende mit einem Auslaß (3) in den Tank mündenden Leitrohr (2), in welches ein Einspeiserohr (4) führt, über das zu speicherndes warmes Wasser in das Leitrohr (2) eingespeist wird, und welches in verschiedenen Höhen angeordnete in den Tank führende Öffnungen (5, 6) aufweist,
dadurch gekennzeichnet, daß
die Stelle, an der das Wasser aus dem Einspeiserohr (4) in das Leitrohr (2) eingespeist wird, in einer mittleren Höhe zwischen dem oberen und unteren Ende des Leitrohres (2) liegt, und daß die Öffnungen (5, 6) sich unterhalb der Einspeisestelle befinden.

2. Warmwasser-Schichtspeicher nach Anspruch 1, dadurch gekennzeichnet, daß die Öffnungen als in verschiedenen Höhen liegende Lochkränze (5, 6) im Leitrohr (2) ausgebildet sind.

3. Warmwasser-Schichtspeicher nach Anspruch 1 oder 2, dadurch gekennzeichnet, daß der Querschnitt des Auslasses (3) des Leitrohres (2) geringer als derjenige des Leitrohres (2) ist.

4. Warmwasser-Schichtspeicher nach Anspruch 3, dadurch gekennzeichnet, daß der Querschnitt (3) des Auslasses (3) des Leitrohres thermostatisch gesteuert ist.

5. Warmwasser-Schichtspeicher nach einem der vorstehenden Ansprüche, dadurch gekennzeichnet, daß das Einspeiserohr (4) von unten kommend koaxial im Leitrohr (2) angeordnet ist.

6. Warmwasser-Schichtspeicher nach Anspruch 5, dadurch gekennzeichnet, daß das Einspeiserohr (4) wärmeisoliert ist.

## Claims

1. Stratified reservoir for hot water with
a tank (8) and
a guiding pipe (2) arranged substantially vertically in the tank (8) and opening into the tank at its upper end with an outlet (3), hot water to be stored being fed into the guiding pipe, via a feeding pipe leading into the guiding pipe, the guiding pipe furthermore comprising openings (5, 6) arranged at different heights and leading into the tank,
characterized in that
the location at which the water from the feeding pipe (4) is fed into the guiding pipe (2) lies at an intermediate hight between the upper and lower end of the guiding pipe (2), and that the openings (5, 6) are provided below the feeding location.

2. Stratified reservoir for hot water according to claim 1, characterized in that the openings are formed as rings of holes (5, 6) located at different heights in the guiding pipe (2).

3. Stratified reservoir for hot water according to claim 1 or 2, characterized in that the cross-section of the outlet (3) of the guiding pipe (2) is smaller than that of the guiding pipe (2).

4. Stratified reservoir according to claim 3, characterized in that the cross-section (3) of the outlet (3) of the guiding pipe is controlled thermostatically.

5. Stratified reservoir for hot water according to any one of the preceeding claims, characterized in that the feeding pipe (4) is arranged in the guiding pipe (2) so as to extend from below and coaxially therewith.

6. Stratified reservoir for hot water according to claim 5, characterized in that the feeding pipe (4) is heat insulated.

## Revendications

1. Ballon accumulateur stratifié pour eau chaude qui comprend un réservoir (8) dans lequel est placée pratiquement verticalement une conduite principale (2) qui possède à son extrémité supérieure un évent (3) débouchant dans le réservoir, qui contient un tube d'alimentation (4) à l'aide duquel de l'eau chaude à stocker est acheminée dans la conduite principale (2) et qui est munie d'orifices (5, 6) situés à différentes hauteurs et débouchant dans le réservoir, ballon accumulateur caractérisé en ce que le niveau auquel l'eau du tube d'alimentation (4) est déversée dans la conduite principale (2) est situé à une hauteur moyenne entre les extrémités supérieure et inférieure de la conduite principale et en ce que les orifices (5, 6) sont situés au-dessous du niveau de déversement.

2. Ballon accumulateur stratifié selon la revendication 1, caractérisé en ce que les orifices sont constitués de couronnes de trous (5, 6) ménagés dans la conduite principale (2) et situés à différentes hauteurs.

3. Ballon accumulateur stratifié selon la revendication 1 ou 2, caractérisé en ce que la section droite de l'évent (3) de la conduite principale (2) est plus petite que celle de la conduite principale (2).

4. Ballon accumulateur stratifié selon la revendication 3, caractérisé en ce que la section droite (3) de l'évent (3) de la conduite principale (2) est commandée thermostatiquement.

5. Ballon accumulateur stratifié selon l'une des revendications précédentes, caractérisé en ce que le tube d'alimentation (4) pénètre par le bas dans la conduite principale (2) dont il est coaxial.

6. Ballon accumulateur stratifié selon la revendication 5, caractérisé en ce que le tube d'alimentation (4) est isolé thermiquement.
